# EUROPÄISCHE PATENTSCHRIFT

(11) **EP 1 375 244 B1**
(45) Veröffentlichungstag und Bekanntmachung des Hinweises auf die Patenterteilung: **06.09.2006**
(21) Anmeldenummer: 03000355.2
(22) Anmeldetag: 10.01.2003
(51) Int. Cl.: B60N 2/48

(54) **Kopfstütze für Kraftfahrzeuge**
Headrest for automotive vehicles
Appui-tête pour véhicules automobiles

(30) Priorität: 20.06.2002 DE 10227526
(43) Veröffentlichungstag der Anmeldung: 02.01.2004
(73) Patentinhaber: Key Plastics Lennestadt GmbH & Co. KG, 57368 Lennestadt (DE)
(72) Erfinder: Brakel, Torsten, 59889 Eslohe (DE)
(74) Vertreter: Köchling, Conrad-Joachim

(56) Entgegenhaltungen:
- DE-A1- 3 900 495
- DE-A1- 19 951 966
- DE-C1- 19 941 712
- GB-A- 2 363 323
- US-A- 6 082 817

## Beschreibung

Die Erfindung betrifft eine Kopfstütze für Kraftfahrzeuge mit einem Bügel, der mit seinen Schenkeln in passende Aufnahmen einer Sitzlehne eingesetzt ist, und mit einem vorzugsweise gepolsterten Stützteil, welches mittelbar am Bügel befestigt ist.

Kopfstützen dieser Art sind im Stand der Technik bekannt. Üblicherweise ist der Bügel ein u-förmig gebogenes Teil aus Runddraht oder auch aus Rohr, wobei die Schenkel des Bügels in entsprechenden Aufnahmen der Sitzlehne eingesetzt sind und gegebenenfalls eine Höhenverstellung (auch gerastet) der Kopfstütze relativ zur Sitzlehne (Rückenlehne) ermöglichen. Es ist auch bekannt, das Stützteil an dem Basisteil des u-förmigen Bügels schwenkbeweglich anzuordnen, um die Neigung des Stützteiles einstellen zu können und somit dem Benutzer anpassen zu können. Ferner sind Kopfstützen bekannt, die in dem Fall, dass das damit ausgestattete Fahrzeug in einen Crash verwickelt ist, insbesondere von hinten gecrasht wird, in Richtung auf den Kopf des auf dem Sitz Sitzenden bewegt werden, um eine günstige Positionierung der Kopfstütze zu erreichen und die Verletzungsgefahr zu mindern. Die entsprechende Verstellbewegung wird dabei vorzugsweise mit einer Sitzbelegungserkennung und mit einem Crashsensor gekoppelt, wobei der Crashsensor die entsprechenden Stellglieder zum Verstellen der Kopfstütze auslöst und die Sitzbelegungserkennung den Sensor aktiviert, sofern der Sitz belegt ist.

Schließlich ist es bekannt, Kopfstützen von der Sitzlehne zu entkoppeln, indem die Kopfstützen mit dem Bügel aus der Sitzlehne herausgezogen werden, was beispielsweise dann vorteilhaft ist, wenn es sich bei der Sitzlehne um eine umklappbare Rücksitzlehne handelt, die zur Erweiterung des Stauraumes des Fahrzeuges umgeklappt werden kann.

Es sind auch Lösungen bekannt, bei denen die Kopfstütze auch bei einer umklappbaren Rücksitzlehnbank an der Rücksitzlehne verbleiben und die Klappbarkeit der Rückensitzlehne dennoch gewährleistet ist, wobei dann die Kopfstützen aber einen Raum benötigen, um das Einschwenken und Umklappen der Rücksitzlehne zu ermöglichen.

Eine Kopfstütze dieser Art ist aus DE 199 41 712 bekannt, die alle Merkmale des Oberbegriffs des unabhängiges Anspruchs 1 offenbart.

Ausgehend von diesem Stand der Technik liegt der Erfindung die Aufgabe zugrunde, eine Kopfstütze gattungsgemäßer Art zu schaffen, die im Nichtgebrauchsfall sehr Platz sparend an der Rücksitzlehne angeordnet werden kann, die eine Einstellung in eine Normalgebrauchsstellung und in eine Komfortstellung ermöglicht und die in Kombination mit einem Crashsensor und gegebenenfalls mit einer Sitzbelegungserkennung zum Schutz des Nackenbereiches und des Kopfes des Benutzers in eine geeignete Lage zwangsverstellt werden kann.

Zur Lösung dieser Aufgabe schlägt die Erfindung vor, dass am Bügel ein Formteil um den Bügel schwenkbar angeordnet ist, dass am Formteil das Stützteil schwenkbar angeordnet ist, wobei diese zweite Schwenkachse nahe des oberen Endes des Formteiles und nahe des oberen Endes des Stützteiles vorgesehen und parallel zur ersten Schwenkachse gerichtet ist, so dass in einer Nichtgebrauchslage das Formteil quer vom Bügel abragt, das Stützteil etwa parallel zu den Schenkeln des Bügels gerichtet ist und zwischen Bügel, Formteil und Stützteil ein etwa u-förmiger Freiraum gebildet ist, in den die obere Randkante der Sitzlehne beim Einschieben der Bügelschenkel in die Aufnahmen eintaucht, in der Normalgebrauchslage das Formteil etwa parallel zum Bügel gerichtet von dessen den Schenkeln abgewandten Seite abragt und das Stützteil etwa gleichgerichtet zum Formteil ausgerichtet ist, ggf. in einer Komfortlage das Formteil gegenüber der Normalgebrauchslage nach vorn zur Sitzvorderkante hin verlagert ist und mit der von den Schenkeln des Bügels aufgespannten Ebene einen flachen stumpfen Winkel einschließt, während das Stützteil mit seiner freien Unterkante vom Formteil weg verlagert ist und mit dem Formteil einen spitzen Winkel einschließt und dass am Formteil oder am Bügel ein Stellhebel um eine dritte Schwenkachse schwenkbar angeordnet ist, die vorzugsweise parallel zu den beiden anderen Schwenkachsen gerichtet ist, wobei der Stellhebel mit einer Zwangsbestätigungsvorrichtung in Wirkverbindung steht, die von einem Crashsensor auslösbar ist, derart, dass mittels des Stellhebels das Stützteil und das Formteil aus der Normalgebrauchslage in die Komfortstellung zwangsverstellt und in dieser festgestellt ist oder in der Komfortstellung festgestellt ist.

Dadurch, dass das Stützteil nicht unmittelbar an dem Basisbereich des u-förmigen Bügels befestigt ist, sondern mittelbar unter Zwischenanordnung des zusätzlichen Formteiles wird eine besonders benutzerfreundliche Anordnung und Ausbildung erreicht. Das Formteil stellt quasi eine Art Gelenklasche dar, die mit einem Ende am Bügel, insbesondere an der Basis des Bügels und mit dem anderen Ende am oberen Ende des Stützteiles angelenkt ist, so dass unterschiedliche Einstellungen in einfacher Weise zu realisieren sind. Insbesondere ist es hierdurch möglich, in der Nichtgebrauchslage die Anordnung so zu treffen, dass das Formteil etwa horizontal ausgerichtet wird und das Stützteil etwa vertikal ausgerichtet wird, so dass zwischen Stützteil, Formteil und Bügel ein etwa u-förmiger Freiraum entsteht, in den die Sitzlehne beim Herunterschieben der Kopfstütze eintauchen kann. Es ist somit eine äußerst Platz sparende Anordnung der Kopfstütze bei Nichtgebrauch möglich, wobei durch diese Anordnung die freie Sicht nach hinten nicht oder nur unwesentlich behindert ist. Des Weiteren ist keine Demontage der Kopfstütze bei Klappung einer Rücksitzlehnbank, die mit solchen Kopfstützen ausgerüstet ist, erforderlich. Auch liegt die Kopfstütze nicht horizontal quasi als Verlängerung der Rücksitzlehne im Fahrgastraum oder Laderaum wie bei herkömmlich einfach geklappten Kopfstützen.

Um die Kopfstütze in die Gebrauchslage zu überführen, wird der Bügel mit seinen Schenkeln aus der Sitzlehne um ein geeignetes Maß herausgezogen und anschleißend das Formteil in eine nahezu vertikale Lage und ebenso das Stützteil in eine nahezu vertikale Lage überführt, wobei das Stützteil das Formteil übergreifen kann und abdeckt. In dieser Position ist die Kopfstütze normal brauchbar. Sofern der Benutzer eine Komfortposition einnehmen möchte, ist es möglich, das Formteil mit seiner freien Randkante geringfügig in Richtung der Sitzvorderkante hin zu verschwenken und gleichzeitig das Stützteil mit seiner freien Unterkante vom Formteil wegzuschwenken, so dass eine näher zum Kopf des Benutzers hin verlagerte, schräge Anordnung des Stützteiles erreicht wird.

Um im Crashfall sicherzustellen, dass die Kopfstütze eine besonders geeignete Sicherheitslage einnimmt, die der Komfortlage vergleichbar ist, ist am Formteil der Stellhebel vorgesehen, der um die dritte Schwenkachse schwenkbar ist. Die dritte Schwenkachse ist vorzugsweise parallel zu den beiden anderen Schwenkachsen gerichtet. Es könnte aber auch eine Anordnung vorgesehen sein, bei der die dritte Schwenkachse quer zu den beiden anderen Schwenkachsen ausgerichtet ist. Der Stellhebel ist mit einer im Normalfall verriegelten Zwangsbetätigungs-vorrichtung gekoppelt, die von einem Crashsensor auslösbar ist, wobei wiederum der Crashsensor gegebenenfalls mit einer Sitzbelegungserkennung gekoppelt sein kann. Bei Auslösen des Crashsensors wird die Zwangsbetätigungsvorrichtung freigegeben und durch diese der Stellhebel derart verschwenkt, dass das Stützteil und das Formteil aus der Normalgebrauchslage in die Komfortstellung zwangsverstellt sind und in dieser Lage arretiert sind oder in der schon eingestellten Komfortstellung arretiert sind, so dass die gewünschte Stützposition für den Benutzer erreicht ist und sichergestellt ist, dass diese Position nicht durch den aufschlagenden Kopf des Benutzers in die Ausgangsstellung zurückgedrängt werden kann. Es können auch zusätzliche Sperrvorrichtungen vorgesehen sein, die eine lösbare Verriegelung der Teile in der Nichtgebrauchslage und eine lösbare Verriegelung der Teile in der Komfortlage ermöglichen, so dass der Benutzer durch Entriegelung dieser Sperre die Teile bestimmungsgemäß einstellen kann.

Insbesondere ist dazu vorgesehen, dass das Stützteil und das Formteil in Normalgebrauchslage form- und/oder kraftschlüssig am Bügel fixiert sind, wobei die Fixierung manuell und durch die Zwangsbetätigungsvorrichtung lösbar ist.

Die Verriegelung in der Normalgebrauchslage kann beispielsweise durch einen federbelasteten Riegel erfolgen, der die Teile oder mindestens eines der Teile, wenn beide Teile miteinander zwangsgekoppelt sind, am Bügel lösbar verriegeln. Durch manuelle Betätigung der Verriegelung kann diese entriegelt werden, so dass die Einstellung in die Komfortstellung oder in die Nichtgebrauchslage möglich ist. Im Crashfall wird die Verriegelung durch den Stellhebel und/oder die Zwangsbetätigungsvorrichtung überwunden. Zusätzlich sind auch Begrenzungsanschläge vorgesehen, die die Verstellung der Kopfstütze aus der Normalgebrauchslage in die Komfortstellung, die der Crashstellung gleicht, begrenzen, so dass eine unerwünscht weitere Verstellung unterbunden ist.

Bevorzugt ist vorgesehen, dass die dritte Schwenkachse durch die Basis des Bügels gebildet ist.

Beispielsweise kann der Stellhebel an der Basis des Bügels drehbar gelagert sein, so dass die Bügelbasis die Schwenkachse bildet.

Eine unter Umständen bevorzugte Weiterbildung wird darin gesehen, das die Zwangsbetätigungsvorrichtung mit einer mechanischen Feder kombiniert ist, die durch eine Rückhaltevorrichtung in vorgespanntem Zustand gehalten ist, wobei die Rückhaltevorrichtung durch den Crashsensor entsperrbar ist und bei entsperrter Rückhaltevorrichtung die Feder freigibt und wobei die Feder den Stellhebel und das Formteil in die Crashlage zwingt.

Bei der mechanischen Feder kann es sich um eine starke Schenkelfeder handeln, deren Windungen um die Basis des Bügels gelegt sind und deren Schenkel durch die Rückhaltevorrichtung im vorgespanntem Zustand zusammengehalten sind. Bei Auslösung durch den Crashsensor wird die Rückhaltevorrichtung entsperrt, so dass die Federschenkel freigegeben sind und die Federschenkel beispielsweise auf den Stellhebel und das Formteil einwirken, so dass beide Teile in die Crashlage gezwungen werden. In dieser Lage sind die Teile wiederum verriegelt, so dass sie nicht beweglich sind, es sei denn die Verriegelung wird manuell oder in sonstiger geeigneter Weise aufgehoben. Die Teile können dann in die Ausgangslage zurückgeführt werden.

Vorzugsweise ist zudem vorgesehen, dass das Stützteil mit dem Formteil zwangsgekoppelt ist, insbesondere durch ein Zahnradgetriebe oder durch ein Hebelgetriebe, so dass die Bewegungen der Teile zwangsgesteuert synchron erfolgen.

Beispielsweise kann an dem Stützteil und an dem Formteil ein Zahnsegment vorgesehen sein, wobei zwischen beiden Zahnsegmenten ein Zahnrad angeordnet ist, welches an dem Formteil drehbar gelagert ist, so dass alle Teile miteinander über ein Zahnradgetriebe in Eingriff stehen. Durch Bewegung des Stützteiles alleine kann damit die Bewegung des Formteiles erzwungen werden. Es sind auch andere Führungsmechanismen möglich. Insbesondere ist es auch möglich, zwischen dem Stellhebel und dem Formteil Zugstangen anzuordnen, die mit entsprechenden Zapfen in eine Lageraufnahme des Stellhebels und in einen kulissenartigen Schlitz des Formteiles eingreifen, so dass durch Betätigung des Stellhebels eine geführte Zwangsmitnahme des Formteiles erfolgt, wobei das Stützteil wiederum mit dem Formteil zwangsgekoppelt ist und demzufolge die gewünschte Bewegung in die Crashlage ausführt.

Zudem ist bevorzugt, dass die erste Schwenkachse nahe des unteren, dem Bügel zugewandten Endes des Formteils vorgesehen ist.

Ein schematisches Ausführungsbeispiel der Erfindung ist in der Zeichnung dargestellt und im Folgenden näher beschrieben.

Die Zeichnungsfiguren zeigen eine Kopfstütze in Seitenansicht, teilweise geschnitten.

Insbesondere zeigt
- Figur 1: eine Kopfstütze in Normalgebrauchslage;
- Figur 2: desgleichen in der Komfortlage;
- Figur 3: desgleichen in der Nichtgebrauchslage;
- Figur 4: desgleichen in der Crashlage.

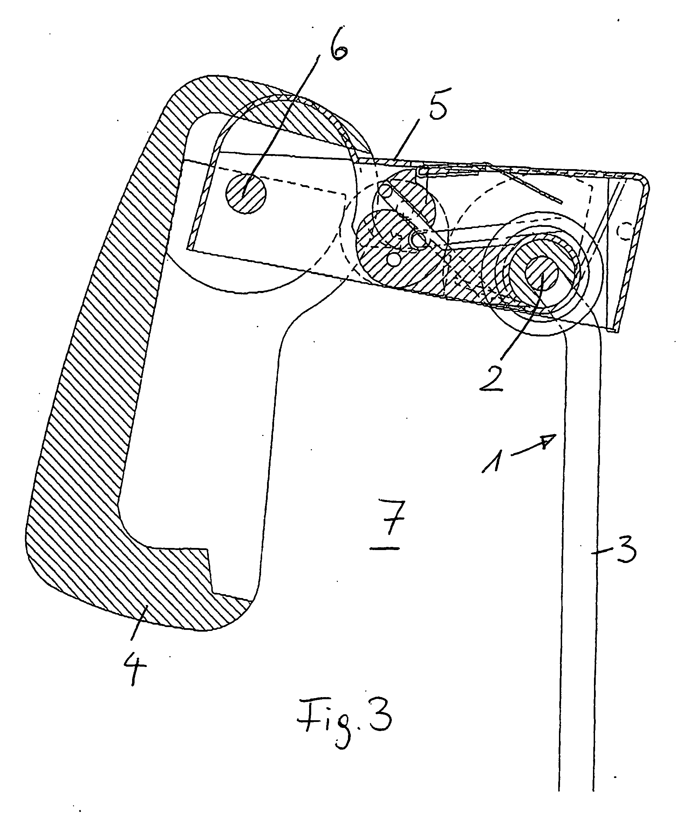

In der Zeichnung ist eine Kopfstütze für Kraftfahrzeuge gezeigt. Sie weist einen Bügel 1 auf, der u-förmig ausgebildet ist und eine Basis 2 sowie Schenkel 3 bildet. Die Schenkel 3 sind in der Gebrauchssituation in passende Aufnahmen einer Sitzlehne, insbesondere Rückenlehne oder Rücksitzlehne eingesetzt. Die Kopfstütze weist ferner ein gepolstertes Stützteil 4 auf. Am Bügel 1, insbesondere die Basis 2, ist ein Formteil 5 angeordnet und um die Basis 2 des Bügels schwenkbar. Diese erste Schwenkachse, gebildet durch die Basis 2, ist nahe des unteren, dem Bügel 1 zugewandten Ende des Formteiles 5 vorgesehen. Am anderen Ende des Formteiles 5 ist das Stützteil 4 schwenkbar angeordnet, wobei diese zweite Schwenkachse 6 nahe dem oberen Ende des Formteiles 5 und nahe dem oberen Ende des Stützteiles 4 vorgesehen ist und parallel zur ersten Schwenkachse (2) gerichtet ist. Im Grunde bildet das Formteil 5 eine Gelenklasche, die einerseits am Bügel 1 un andererseits am Stützteil 4 angelenkt ist. Diese Anordnung ermöglicht es, unterschiedliche Lagen in einfacher Weise einzustellen. So ist beispielsweise die Einstellung einer Nichtgebrauchslage gemäß Figur 3 möglich. Dabei ragt das Formteil 5 etwa quer vom Bügel 1 ab und das Stützteil 4 ist etwa parallel zu den Schenkeln 3 des Bügels 1 gerichtet. Zwischen Bügel 1 insbesondre Bügelschenkeln 3, Formteil 5 und Stützteil 4 ist somit ein Freiraum 7 gebildet, in den die obere Randkante der Sitzlehne beim Einschieben der Bügelschenkel 3 in die entsprechenden Aufnahmen eintaucht. Die gesamte Kopfstütze ist damit Platz sparend und die Sicht nicht behindernd anzuordnen, was insbesondere auch das Umklappen von mit solchen Kopfstützen ausgerüsteten Rücksitzlehnen vereinfacht.

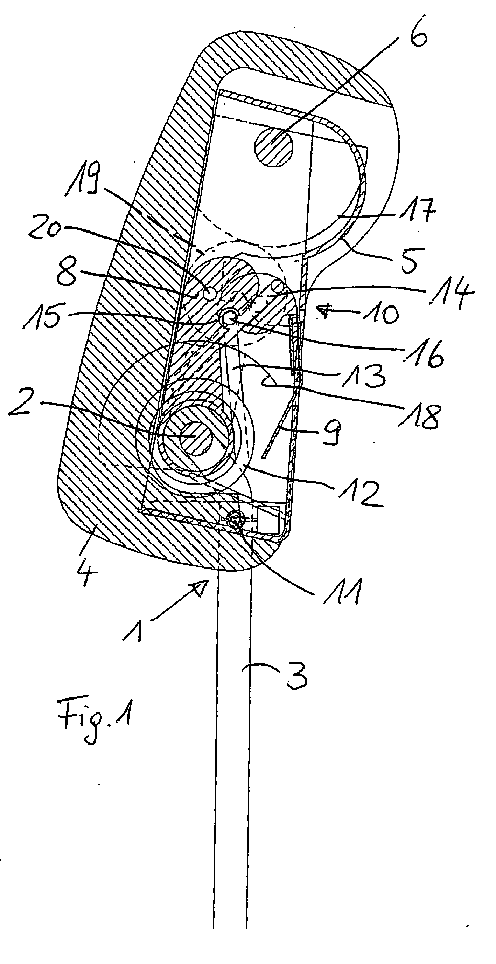

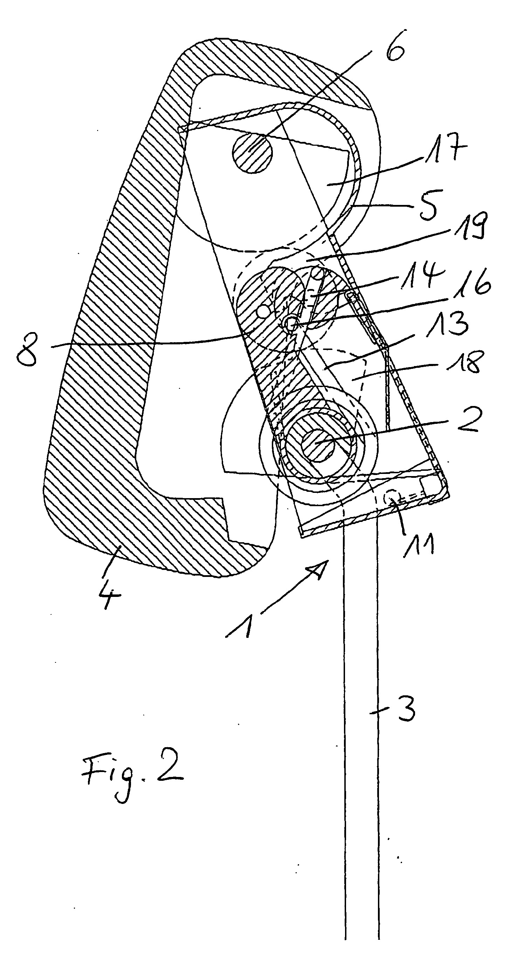

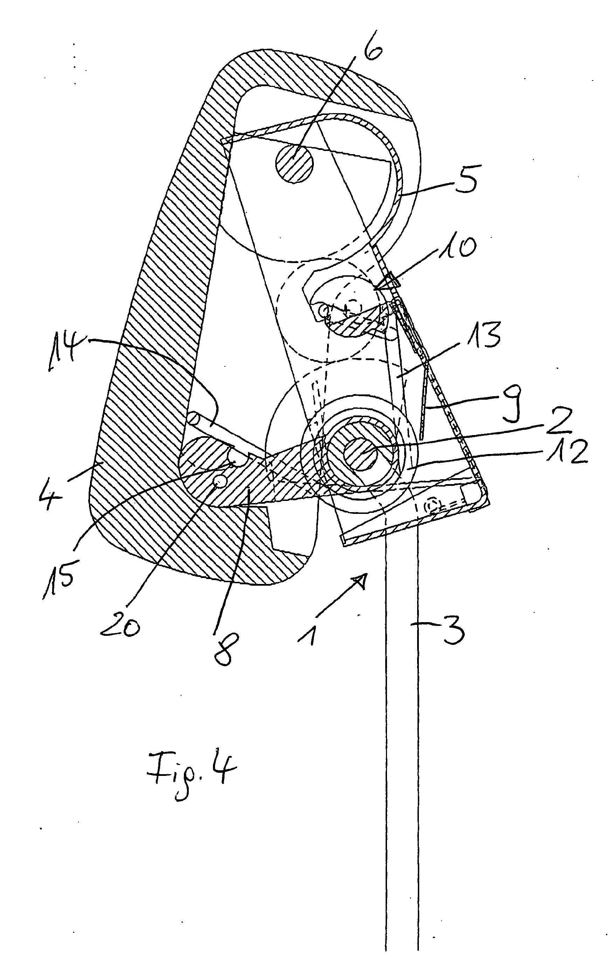

In der Normalgebrauchslage, die in Figur 1 gezeigt ist, ist das Formteil 5 etwa parallel zum Bügel 1 (zu dessen Schenkeln 3) gerichtet und ragt von dessen den Schenkeln 3 abgewandten Seite ab. Das Stützteil 4 ist etwa gleichgerichtet zum Formteil 5 ausgerichtet, wobei das Stützteil 4 rückwärtig eine Ausnehmung aufweist, in die das Formteil 5 verdeckt eingreifen kann. Vorzugsweise aber nicht zwingend ist noch die Einstellung einer Komfortlage gemäß Figur 2 möglich. In dieser Komfortlage ist das Formteil 5 gegenüber der Normalgebrauchslage nach vorn zur Sitzvorderkante hin verlagert (in der Zeichnung entgegen dem Uhrzeigersinn) und schließt mit der von den Schenkeln 3 aufgespannten Ebene einen flachen stumpfen Winkel ein. In der Zeichnung ist nur einer der beiden Schenkel 3 ersichtlich. Das Stützteil 4 ist mit seiner freien Unterkante vom Formteil 5 weg verlagert und schließt mit dem Formteil einen spitzen Winkel ein. Schließlich ist noch eine Crashstellung gemäß Figur 4 einstellbar, die der Komfortstellung gemäß Figur 3 weitgehend gleicht. Um aber im Crashfall die Verstellung der Kopfstütze in die Crashlage gemäß Figur 4 zu erzwingen ist am Bügel 1, insbesondere der Basis 2 des Bügels 1 ein Stellhebel 8 schwenkbar angeordnet. Die Schwenkachse des Stellhebels 8 ist eine dritte Schwenkachse, die im Ausführungsbeispiel ebenfalls durch die Basis 1 gebildet ist. Der Stellhebel 8 steht mit einer Zwangsbetätigungsvorrichtung 9 über ein Klinkengesperre 10 in Wirkverbindung. Die Zwangsbetätigungsvorrichtung 9 ist im Ausführungsbeispiel ein Bowdenzug, der beispielsweise durch einen hohl ausgebildeten Schenkel 3 des Bügels 1 geführt und durch ein automatisch betätigbares Element betätigbar ist. Das Betätigungselement kann beispielsweise ähnlich wie eine Gurtstrammereinrichtung ausgebildet sein. Dieses Betätigungselement ist mit einem Crashsensor gekoppelt, der im Falle eines Crashs auslöst und die Zwangsbetätigungsvorrichtung betätigt, um das Klinkengesperre 10 zu verdrehen. Die weitere Funktion des Klinkengesperres 10 wird nachstehend noch weiter erläutert.

Bei betätigter Zwangsbetätigungsvorrichtung wird das Stützteil mittels des Stellhebels 8 und ebenso vorzugsweise das Formteil 5 mittels des Stellhebels 8 zwangsverstellt, so dass sich der Stellhebel 8 aus der Position, die beispielsweise in Figur 2 gezeigt ist, in die Position zwangsverlagert, die in Figur 4 gezeigt ist.

Das Stützteil 4 und das Formteil 5 sind in der Normalgebrauchslage gemäß Figur 1 form- und/oder kraftschlüssig am Bügel 3 fixiert. Die Fixierung kann beispielsweise mittels eines parallel zur Basis 2 des Bügels 1 verschieblichen federnden Riegels 11 erfolgen, der in der Position gemäß Figur 1 in eine Kerbe oder ein Sackloch des Bügelschenkels 3 eingreift. Diese Verrieglung kann leichtgängig sein, so dass allein durch manuelle Kraftausübung die Verrieglung gelöst werden kann, wenn beispielsweise das Stützteil 4 aus der Position gemäß Figur 1 in die Position gemäß Figur 3 verlagert wird. Der gefederte Riegel 11 als Bestandteil des Formteiles 5 liegt dann frei hinter den Schenkeln 3 des Bügels 1. es ist damit dann eine weitere Verstellung beispielsweise aus der Position gemäß Figur 2 in die Position gemäß Figur 3 möglich. Eine Rückverlagerung in die Position gemäß Figur 1 ist nur dann möglich, wenn der Riegel 11 manuell oder in anderer Weise eingezogen wird, so dass das Formteil die Position gemäß Figur 1 einnehmen kann und der Riegel 11 wiederum in die entsprechenden Sacklochbohrungen oder dergleichen der Bügelschenkel 3 einfällt. Es ist somit durch den Riegel 11 auch eine Sperre gebildet, die verhindert, dass die Kopfstütze aus der Position gemäß Figur 2 oder insbesondere aus der Position gemäß Figur 4 allein durch den anschlagenden Kopf des Benutzers in die Position gemäß Figur 1 zurückverstellt wird.

Die Zwangsbetätigungsvorrichtung 9 wird ergänzt durch eine mechanische Feder 12, die als Doppelschenkelfeder ausgebildet ist und deren Windungen um die Basis 2 des Bügels 1 gelegt sind, bzw. um das Teil des Stellhebels 8, welches die Basis 2 des Bügels 1 umgreift. Bei nicht ausgelöstem Crashsensor sind die Schenkel 13,14 der Feder 12 durch das Gesperre 10 in der Position gehalten, die in Figur 1 bis 3 gezeigt ist. Dabei kann der kürzere Schenkel 13 an dem Gesperre 14 und dem Stellhebel (bei 15) arretiert sein, während der längere Schenkel 14 durch eine Abwinklung 16 des kürzeren Schenkels 13 mitgenommen und gehalten ist. Die Feder 12 ist somit vorgespannt gehalten und durch die Rückhaltevorrichtung in Form des Gesperres 10 gesperrt. Dieses Gesperre 10 ist wiederum über die Zwangsbetätigungsvorrichtung 9, die mit einem Crashsensor gekoppelt ist, entsperrbar. Bei entsperrter Rückhaltevorrichtung (Klinkengesperre 10) werden die Schenkel 13,14 der Feder 12 freigegeben, wobei wie insbesondere in Figur 4 ersichtlich ist, der Schenkel 13 auf das Formteil 5 einwirkt und der Schenkel 14 auf den Stellhebel 8 einwirkt, der wiederum auf das Stützteil 4 einwirkt und dieses verstellt. Es wird somit zwingend die Crashlage gemäß Figur 4 eingestellt.

Zusätzlich ist das Stützteil 4 mit dem Formteil 5 zwangsgekoppelt, insbesondere durch ein Zahnradgetriebe. Dazu ist an dem Stützteil 4 ein Zahnsegment 17 vorgesehen, am Formteil 5 ein Zahnsegment 18 und am Formteil 5 ein mit beiden Zahnsegmenten 17,18 in Eingriff stehendes Zahnrad 19 drehbar gelagert. Das Zahnsegment 17 weist eine teilkreisförmige Zahnung auf, deren Mittelpunkt in der Achse 6 liegt, während das Zahnsegment 18 einen Teilkreis mit Zahnung aufweist, dessen Zentrum die Achse 2 bildet. Die Zahnungen der Elemente 17,19,18 sind miteinander in Eingriff, so dass die Verstellung beispielsweise des Stützteiles 4 zwangsläufig auch ein Verstellung des Formteiles 5 zur Folge hat.

Der Stellhebel 8 kann beispielsweise bei 20 noch von einer parallel zur Basis 2 des Bügels 1 geführten Stange durchgriffen sein, die an ihren Enden Zugstangen aufweist. Diese Zugstangen weisen an ihren Enden quer gerichtete Zapfen auf. Diese Zapfen greifen in Führungsschlitze, die in den Seitenwangen des kastenartig ausgebildeten Formteiles 5 vorgesehen sind und eine kulissenartige Führung bilden. Diese Ausbildung dient der Verbesserung der Zwangsführung und der Stabilität der Gesamteinrichtung.

Der Stellhebel 8 kann in Richtung der Basis 2 des Bügels 1 eine relativ große Erstreckung aufweisen, die der Länge der Basis des Bügels 2 gleicht. Die Anordnung der Zwangsbetätigungsvorrichtung und der Feder 12 kann paarweise nahe der beiden Abwinklungen der Basis des Bügels 1 vorgesehen sein, um eine sichere Funktion zu gewährleisten.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Kopfstütze für Kraftfahrzeuge mit einem Bügel (1), der mit seinen Schenkeln (3) in passende Aufnahmen einer Sitzlehne eingesetzt ist, und mit einem vorzugsweise gepolsterten Stützteil (4), welches mittelbar am Bügel (1) um eine erste Schwenkachse (2) schwenkbar befestigt ist, wobei am Bügel (1) ein Formteil (5) um den Bügel (1) schwenkbar (2) angeordnet ist, und wobei am Formteil (5) das Stützteil (4) um eine zweite Schwenkachse (6) schwenkbar angeordnet ist, wobei diese zweite Schwenkachse (6) nahe des oberen Endes des Formteiles (5) und nahe des oberen Endes des Stützteiles (4) vorgesehen und parallel zur ersten Schwenkachse (2) gerichtet ist, so dass in einer Nichtgebrauchslage das Formteil (5) quer vom Bügel (1) abragt, das Stützteil (4) etwa parallel zu den Schenkeln (3) des Bügels (1) gerichtet ist und wobei Bügel (1), Formteil (5) und Stützteil (4) eine U-form bilden, die einen Freiraum (7) umschließt, in den die obere Randkante der Sitzlehne beim Einschieben der Bügelschenkel (3) in die Aufnahmen eintaucht, in der Normalgebrauchslage das Formteil (5) etwa parallel zum Bügel (1) gerichtet von dessen den Schenkeln (3) abgewandten Seite abragt und das Stützteil (4) etwa gleichgerichtet zum Formteil (5) ausgerichtet ist, ggf. in einer Komfortlage das Formteil (5) gegenüber der Normalgebrauchslage nach vorn zur Sitzvorderkante hin verlagert ist und mit der von den Schenkeln (3) des Bügels (1) aufgespannten Ebene einen flachen stumpfen Winkel einschließt, während das Stützteil (4) mit seiner freien Unterkante vom Formteil (5) weg verlagert ist und mit dem Formteil (4) einen spitzen Winkel einschließt **dadurch gekennzeichnet dass** am Formteil (5) oder am Bügel (1) ein Stellhebel (8) um eine dritte Schwenkachse schwenkbar angeordnet ist, die vorzugsweise parallel zu den beiden anderen Schwenkachsen gerichtet ist, wobei der Stellhebel (8) mit einer Zwangsbestätigungsvorrichtung (9) in Wirkverbindung steht, die von einem Crashsensor auslösbar ist, derart, dass mittels des Stellhebels (8) das Stützteil (4) und das Formteil (5) aus der Normalgebrauchslage in eine Komfortstellung zwangsverstellt und in dieser festgestellt ist oder in der Komfortstellung festgestellt ist.

2. Kopfstütze nach Anspruch 1, **dadurch gekennzeichnet, dass** das Stützteil (4) und das Formteil (5) in Normalgebrauchslage form- und/oder kraftschlüssig am Bügel (1) fixiert sind, wobei die Fixierung manuell und durch die Zwangsbetätigungsvorrichtung (9) lösbar ist.

3. Kopfstütze nach einem der Ansprüche 1 oder 2, **dadurch gekennzeichnet, dass** die dritte Schwenkachse durch die Basis (2) des Bügels (1) gebildet ist.

4. Kopfstütze nach einem der Ansprüche 1 bis 3, **dadurch gekennzeichnet, dass** die Zwangsbetätigungsvorrichtung (9) mit einer mechanischen Feder (12) kombiniert ist, die durch eine Rückhaltevorrichtung (10) in vorgespanntem Zustand gehalten ist, wobei die Rückhaltevorrichtung (10) durch den Crashsensor entsperrbar ist und bei entsperrter Rückhaltevorrichtung (10) die Feder (12) freigibt und wobei die Feder (12) den Stellhebel (8) und das Formteil (5) in die Crashlage zwingt.

5. Kopfstütze nach einem der Ansprüche 1 bis 4, **dadurch gekennzeichnet, dass** eine Zwangsverriegelungsvorrichtung (11) an dem Formteil (5) angeordnet ist, die mit dem Bügel (1) zusammenwirkt, derart dass das Stützteil (4), der Stellhebel (8) und das Formteil (5) in der Crashlage gegen Rückverlagerung verriegelt sind.

6. Kopfstütze nach einem der Ansprüche 1 bis 5, **dadurch gekennzeichnet, dass** das Stützteil (4) mit dem Formteil (5) zwangsgekoppelt ist, insbesondere durch ein Zahnradgetriebe (17,18,19) oder durch ein Hebelgetriebe, so dass die Bewegungen der Teile zwangsgesteuert synchron erfolgen.

7. Kopfstütze nach einem der Ansprüche 1 bis 6, **dadurch gekennzeichnet, dass** die erste Schwenkachse (2) nahe des unteren, dem Bügel (1) zugewandten Ende des Formteils (5) vorgesehen ist.

## Claims

1. A head rest for motor vehicles comprising a frame (1), which is inserted by its legs (3) into matching receivers of a seat back, and comprising a preferably padded support part (4), which is fixed indirectly to the frame (1) to pivot around a first pivot axis (2), a moulding (5) being disposed on the frame (1) to pivot (2) around said frame (1), and the support part (4) being disposed on the moulding (5) to pivot around a second pivot axis (6), this second pivot axis (6) being provided close to the upper end of the moulding (5) and close to the upper end of the support part (4) and being directed parallel to the first pivot axis (2), so that in a position of non-use the moulding (5) projects at right angles from the frame (1), the support part (4) is directed roughly parallel to the legs (3) of the frame (1) and whereby the frame (1), moulding (5) and support part (4) form a U shape, which encloses a free space (7) into which the upper edge of the seat back dips when the frame legs (3) are inserted into the receivers, in the normal position of use the moulding (5) protrudes, directed roughly parallel to the frame (11), from its side further from the legs (3), and the support part (4) is aligned roughly parallel to the moulding (5), possibly, in a comfort position the moulding (5), is displaced forwards towards the front edge of the seat when compared with the normal position of use, and with the plane spanned by the legs (3) of the frame (1) encloses a flat, obtuse angle, whereas the support part (4) is displaced with its free lower edge away from the moulding (5) and with the moulding (4) encloses an acute angle,
**characterised in that** (1) an adjusting lever (8) is disposed on the moulding (5) or on the frame to pivot around a third pivot axis, which is preferably directed parallel to the two other pivot axes, the adjusting lever (8) being in active communication with a forced operating device (9), which can be triggered by a crash sensor in such a manner that by means of the adjusting lever (8) the support part (4) and the moulding (5) are forcibly moved from the normal position of use into a comfortable position and are fixed in said position or in the comfortable position.

2. A head rest according to Claim 1,
**characterised in that** the support part (4) and the moulding (5) are fixed positively and/or non-positively to the frame (1) in the normal position of use, with it being possible to release the fixing manually and by the forced actuating device (9).

3. A head rest according to one of Claims 1 or 2,
**characterised in that** the third pivot axis is formed by the base (2) of the frame (1).

4. A head rest according to one of Claims 1 to 3,
**characterised in that** the forced operating device (9) is combined with a mechanical spring (12) which is held by a retention device (10) in the prestressed state, it being possible for the retention device (10) to be unlocked by the crash sensor and when the retention device (10) is unlocked releases the spring (12) and the spring (12) forcing the adjusting lever (8) and the moulding (5) into the crash position.

5. A head rest according to one of Claims 1 to 4,
**characterised in that** a positive locking device (11) is provided on the moulding (5) and interacts with the frame (1) in such a manner that the support part (4), the adjusting lever (8) and the moulding (5) are locked in the crash position to prevent reverse displacement.

6. A head rest according to one of Claims 1 to 5,
**characterised in that** the support part (4) is permanently coupled with the moulding (5), in particular by a gear mechanism (17, 18, 19) or by a link mechanism so that the movements of the parts take place synchronously under positive control.

7. A head rest according to one of Claims 1 to 6,
**characterised in that** the first pivot axis (2) is provided close to the lower end of the moulding (5) facing the frame (1).

## Revendications

1. Appuie-tête pour véhicules automobiles, comprenant un étrier (1) qui est inséré avec ses branches (3) dans des logements adaptés d'un dossier et une partie d'appui (4) de préférence rembourrée qui est fixée indirectement sur l'étrier (1) de manière à pouvoir pivoter autour d'un premier axe de pivotement (2), une pièce moulée (5) étant disposée sur l'étrier (1) de manière à pouvoir pivoter autour de l'étrier (1) et la partie d'appui (4) étant disposée sur la pièce moulée (5) de manière à pouvoir pivoter autour d'un deuxième axe de pivotement (6), ce deuxième axe de pivotement (6) étant prévu à proximité de l'extrémité supérieure de la pièce moulée (5) et à proximité de l'extrémité supérieure de la pièce d'appui (4) et étant orienté parallèlement au premier axe de pivotement (2) de telle manière que la pièce moulée (5) dépasse transversalement de l'étrier (1) dans une position de non utilisation, que la pièce d'appui (4) est orientée à peu près parallèlement aux branches (3) de l'étrier (1), et étrier (1), pièce moulée (5) et pièce d'appui (4) forment une forme en U qui enferme un espace libre (7) dans lequel l'arête de bordure supérieure du dossier plonge lors de l'insertion des branches d'étrier (3) dans les logements, la pièce moulée (5) orientée à peu près parallèlement à l'étrier (1) dépasse du côté de celui-ci opposé aux branches (3) dans la position d'utilisation normale et la pièce d'appui (4) est orientée à peu près dans la même orientation que la pièce moulée (5), éventuellement dans une position de confort la pièce moulée (5) est déplacée par rapport à la position d'utilisation normale vers l'avant vers le bord avant du siège et forme un angle obtus plat avec le plan formé par les branches (3) de l'étrier (1) pendant que la pièce d'appui (4) est déplacée avec son bord inférieur libre à partir de la pièce moulée (5) et forme un angle aigu avec la pièce moulée (4), **caractérisé en ce que**, sur la pièce moulée (5) ou sur l'étrier (1), un levier de commande (8) est disposé de manière à pouvoir pivoter autour d'un troisième axe de pivotement qui est orienté de préférence parallèlement aux deux autres axes de pivotement, le levier de commande (8) étant en liaison active avec un dispositif d'actionnement forcé (9) qui peut être déclenché par un capteur de collision de telle manière que, au moyen du levier de commande (8), la pièce d'appui (4) et la pièce moulée (5) sont déplacées obligatoirement à partir de la position d'utilisation normale pour aller dans une position de confort et sont fixées dans cette position ou sont fixées dans la position de confort.

2. Appuie-tête selon la revendication 1, **caractérisé en ce que** la pièce d'appui (4) et la pièce moulée (5) sont fixées dans la position normale d'utilisation de manière solidaire avec correspondance de forme et/ou par une liaison dynamique sur l'étrier (1), la fixation étant séparable manuellement et par le dispositif d'actionnement forcé (9).

3. Appuie-tête selon l'une des revendications 1 ou 2, **caractérisé en ce que** le troisième axe de pivotement est formé par la base (2) de l'étrier (1).

4. Appui-tête selon l'une quelconque des revendications 1 à 3, **caractérisé en ce que** le dispositif d'actionnement forcé (9) est combiné avec un ressort mécanique (12) qui est maintenu dans l'état précontraint par un dispositif de retenue (10), ledit dispositif de retenue (10) étant déverrouillable par le capteur de collision et libérant le ressort (12) lorsque le dispositif de retenue (10) est déverrouillé et le ressort (12) forçant le levier de commande (8) et la pièce moulée (5) à aller dans la position de collision.

5. Appuie-tête selon l'une quelconque des revendications 1 à 4, **caractérisé en ce qu'**un dispositif de verrouillage forcé (11) est disposé sur la pièce moulée (5), lequel coopère avec l'étrier (1) de telle manière que la pièce d'appui (4), le levier de commande (8) et la pièce moulée (5) sont verrouillés contre un déplacement en sens inverse dans la position de collision.

6. Appuie-tête selon l'une quelconque des revendications 1 à 5, **caractérisé en ce que** la pièce d'appui (4) est accouplée obligatoirement à la pièce moulée (5), en particulier par un engrenage (17, 18, 19) ou un mécanisme à levier, de telle manière que les mouvements des pièces ont lieu de façon synchrone par commande forcée.

7. Appuie-tête selon l'une quelconque des revendications 1 à 6, **caractérisé en ce que** le premier axe de pivotement (2) est prévu à proximité de l'extrémité inférieure, tournée vers l'étrier (1), de la pièce moulée (5).
